# EUROPÄISCHE PATENTSCHRIFT

(11) **EP 2 958 768 B1**
(45) Veröffentlichungstag und Bekanntmachung des Hinweises auf die Patenterteilung: **11.12.2019**
(21) Anmeldenummer: 14707657.4
(22) Anmeldetag: 04.02.2014
(51) Int. Cl.: B60L 5/08, B60L 5/36, B60L 5/19, H01R 41/02

(54) **KONTAKTVORRICHTUNG ZUR KONTAKTIERUNG EINER KONTAKTLEITERANORDNUNG**
CONTACT DEVICE FOR CONTACTING A CONTACT CONDUCTOR ARRANGEMENT
DISPOSITIF D'ÉTABLISSEMENT D'UN CONTACT ÉLECTRIQUE AVEC UN SYSTÈME DE CONDUCTEURS DE CONTACT

(30) Priorität: 19.02.2013 DE 102013202671
(43) Veröffentlichungstag der Anmeldung: 30.12.2015
(73) Patentinhaber: Schunk Transit Systems GmbH, 5101 Bergheim (AT)
(72) Erfinder: GAMSJÄGER, Tobias, A-5020 Salzburg (AT)
(74) Vertreter: advotec.
(86) Internationale Anmeldenummer: PCT/EP2014/052157
(87) Internationale Veröffentlichungsnummer: WO 2014/127991

(56) Entgegenhaltungen:
- DE-A1- 3 104 678
- DE-A1- 10 054 766
- DE-A1-102011 076 620
- DE-A1-102011 076 623
- DE-C- 845 056
- JP-A- S62 126 095
- US-A- 1 828 949
- US-A1- 2011 106 349

## Beschreibung

Die vorliegende Erfindung betrifft eine Kontaktvorrichtung gemäß Anspruch 1.

Aus der DE 10 2011 076 623 A1 ist eine Kontaktvorrichtung zur Kontaktierung einer Kontaktleiteranordnung mit zwei Kontaktleitern bekannt, wobei die Kontaktvorrichtung zwei Kontaktleistenanordnungen mit jeweils zwei auf einem Kontaktleistenträger angeordneten Kontaktleisten aufweist, wobei die Kontaktleistenträger miteinander verbunden sind, derart, dass die Kontaktleistenträger mit den zueinander parallel ausgerichteten Kontaktleisten ein Parallelogramm ausbilden, wobei eine Mittelachse einer Verbindungsstange der Kontaktleistenträger in einem Gelenkpunkt mit einem Basisträger drehgelenkig verbunden ist, derart, dass eine Zustellbewegung des Basisträgers in Richtung der Kontaktleiteranordnung eine entsprechende Zustellbewegung der Kontaktleisten bewirkt.

Kontaktvorrichtungen der eingangs genannten Art sind in der Regel Bestandteil von Stromübertragungssystemen für elektrisch betriebene Maschinen, die an eine externe Energiequelle angeschlossen sind. Insbesondere können Kontaktvorrichtungen der eingangs genannten Art zur Stromübertragung von elektrisch betriebenen Fahrzeugen verwendet werden, also beispielsweise zur Übertragung von Strom über ein Oberleitungsdrahtsystem auf den elektrischen Antrieb eines Schienenfahrzeugs. Insbesondere bei hybriden Antriebssystemen, bei denen neben der Versorgung mit elektrischem Strom noch eine andere Energiequelle zur Verfügung steht, werden Kontaktvorrichtungen der eingangs genannten Art für eine temporäre Stromübertragung eingesetzt.

Die insbesondere für eine temporäre Stromübertragung benötigte temporäre Kontaktierung der Kontaktvorrichtung mit einer stromzuführenden Kontaktleiteranordnung erfordert in der Regel eine mit der Kontaktvorrichtung verbundene Zustelleinrichtung, die beispielsweise als Hubeinrichtung ausgeführt sein kann, um die Kontaktleisten der Kontaktvorrichtung zur Anlage gegen die Kontaktleiteranordnung zu bringen und bei Bedarf den Kontakt durch Entfernung der Kontaktleisten von der Kontaktleiteranordnung wieder zu unterbrechen. Die hierzu mit den Kontaktleisten ausgeführten Zustellbewegungen erfordern je nach Größe und Installationsbedingungen der benötigten Kontaktvorrichtungen mehr oder weniger aufwändig gestaltete Zustelleinrichtungen, die oftmals sowohl den konstruktiven Aufwand als auch die Herstellungskosten für die eigentliche Kontaktvorrichtung bei weitem übersteigen.

Aus der DE 845 056 C ist eine Kontaktvorrichtung bekannt, die ein zwei Kontaktleistenträger miteinander verbindendes Parallelgestänge aufweist, das sich parallel zu den Kontaktleitern bzw. quer zu den Kontaktleisten erstreckt.

Der vorliegenden Erfindung liegt die Aufgabe zugrunde, eine Kontaktvorrichtung vorzuschlagen, die unabhängig vom vertikalen Abstand der Kontaktleiter untereinander eine einheitliche Kontaktkraft zwischen den Kontaktleisten und den Kontaktleitern ermöglicht mittels einer kompakt ausgebildeten Zustelleinrichtung.

Diese Aufgabe wird durch eine Kontaktvorrichtung mit den Merkmalen des Anspruchs 1 gelöst.

Bei der erfindungsgemäßen Kontaktvorrichtung sind Kontaktleistenträger, auf denen die zur Kontaktierung der Kontaktleiteranordnung vorgesehenen Kontaktleisten angeordnet sind, über ein zwei parallel angeordnete Verbindungsstangen aufweisendes Parallelgestänge miteinander verbunden, derart, dass die Kontaktleistenträger jeweils in einer von zwei parallelen Gelenkebenen in voneinander beabstandeten Gelenkpunkten auf parallelen Drehachsen mit den Verbindungsstangen verbunden sind und mit parallel zueinander ausgerichteten Kontaktleisten ein Parallelogramm ausbilden. Zumindest eine parallel zu den Drehachsen verlaufende Mittelachse einer Verbindungsstange ist in einem Gelenkpunkt mit einem Basisträger drehgelenkig verbunden, derart, dass eine Zustellbewegung des Basisträgers in Richtung der Kontaktleiteranordnung eine entsprechende Zustellbewegung der Kontaktträgerleisten bewirkt.

Aufgrund der erfindungsgemäßen Ausgestaltung der Kontaktvorrichtung wird eine Kinematik ermöglicht, die sicherstellt, dass eine Kontaktierung zwischen zwei über ein Parallelgestänge mit einem gemeinsamen Basisträger beweglich verbundenen Kontaktleisten und zwei voneinander unabhängigen Kontaktleitern einer Kontaktleiteranordnung über lediglich eine mit dem Basisträger der Kontaktvorrichtung verbundene Zustelleinrichtung mit definierter und übereinstimmender Kontaktkraft an den Kontaktleitern der Kontaktleiteranordnung anliegen.

Aufgrund der parallel zueinander ausgerichteten Kontaktleisten in Kombination mit den Verbindungsstangen des Parallelgestänges wird ein Getriebe-Parallelogramm ausgebildet, das sicherstellt, dass unabhängig vom horizontalen und vertikalen Abstand der Kontaktleiter untereinander eine einheitliche Kontaktkraft zwischen den Kontaktleisten und den Kontaktträgern ausgebildet wird.

Das als Gelenkparallelogramm ausgebildete Parallelgestänge, mit dem die auf den Kontaktleistenträgern angeordneten Kontaktleisten an den Basisträger angeschlossen sind, gewährleistet einerseits, dass sich die Kontaktleisten stets in zueinander parallelen Ebenen befinden und sich andererseits bei Anlage einer Kontaktleiste gegen einen Kontaktleiter der Kontaktleiteranordnung vermittels des Parallelgestänges eine übereinstimmende Kontaktkraft zwischen den Kontaktleisten und den zugeordneten Kontaktleitern auch dann einstellt, wenn sich die Kontaktleiter in unterschiedlichen Kontaktleiterebenen befinden.

Erfindungsgemäß sind beide Verbindungsstangen mit ihrer jeweils parallel zu den Drehachsen verlaufenden Mittelachse in einem Gelenkpunkt mit dem Basisträger drehgelenkig verbunden, daher wird eine besonders stabile Ausführung der Kontaktvorrichtung möglich. Bei einer weiteren bevorzugten Ausführungsform der Kontaktvorrichtung sind die Kontaktleisten über Federeinrichtungen mit den Kontaktleistenträgern verbunden, sodass bei einer Kontaktierung zwischen den Kontaktleisten und den Kontaktleitern der Kontaktleiteranordnung eine stetige Zunahme der Kontaktkraft ermöglicht wird.

Wenn zusätzlich zu den beiden Kontaktleistenträgern der Basisträger als weiterer Kontaktleistenträger ausgebildet ist, mit einer über eine Federeinrichtung mit dem Basisträger verbundene Kontaktleistenanordnung mit zumindest einer Kontaktleiste, kann eine gleichzeitige Kontaktierung von zumindest drei Kontaktleitern einer Kontaktleiteranordnung durchgeführt werden, wobei sich die drei Kontaktleiter in unterschiedlichen Kontaktleiterebenen befinden können.

Vorzugsweise erfolgt die drehgelenkige Verbindung zwischen den Verbindungsstangen und dem Basisträger in zwei voneinander beabstandeten Gelenkpunkten des Basisträgers, die sich in einer parallel zu den Gelenkebenen der Kontaktleistenträger angeordneten Gelenkebene befinden, so dass auch die Kontaktleiste des Basisträgers während der Zustellung parallel zu den Erstreckungsebenen der Kontaktleiter ausgerichtet ist.

Insbesondere dann, wenn die Anordnung der Kontaktleistenanordnung auf dem Basisträger derart gewählt ist, dass sich die Kontaktleistenanordnung des Basisträgers oberhalb der Kontaktleisten der weiteren Kontaktleistenträger befindet, kann sichergestellt werden, dass beim Einsatz der Kontaktvorrichtung stets zuerst eine Kontaktierung zwischen der Kontaktleistenanordnung des Basisträgers und erst anschließend eine Kontaktierung zwischen den Kontaktleisten der beiden weiteren Kontaktleistenträger stattfindet. Dies kann besonders dann von Vorteil sein, wenn etwa ein mittlerer Kontaktleiter einer Kontaktleiteranordnung als Erdungsleiter ausgebildet ist und eine sichere Kontaktierung zwischen der Kontaktleiteranordnung und der elektrischen Maschine es erfordert, dass als erstes eine elektrische Kontaktierung zum Erdungsleiter erfolgt.

Vorzugsweise umfasst die Kontaktleistenanordnung des Basisträgers zumindest zwei Kontaktleisten, die hintereinander oder auch quer zur Erstreckungsrichtung der Kontaktleiteranordnung nebeneinander liegend angeordnet sein können.

Wenn jeder Kontaktleiste eine Federeinrichtung zugeordnet ist, ist es möglich, über die verschiedenen Kontaktleisten der Kontaktleistenanordnung des Basisträgers in unterschiedlichen Kontaktleiterebenen angeordnete Kontaktleiter zu kontaktieren.

Wenn die Kontaktleisten zumindest teilweise als Schleifkontaktleisten ausgebildet sind, können konventionelle Kontaktleisten verwendet werden.

Vorzugsweise sind die Kontaktleisten zumindest teilweise drehbar auf den Kontaktleistenträgern angeordnet, so dass der Verschleiß der Kontaktleisten reduziert werden kann. Darüber hinaus ist es somit möglich, dass die Kontaktleisten sich an den Kontaktleitern ausrichten können, um eine möglichst große Kontaktfläche zu ermöglichen.

Wenn der Basisträger zur Ausführung einer Zustellbewegung mit einer Hubvorrichtung verbunden ist, ist eine Zustellbewegung der Kontaktvorrichtung besonders einfach ausführbar; insbesondere dann, wenn die Hubvorrichtung über ein Drehgelenk mit dem Basisträger verbunden ist.

Nachfolgend werden bevorzugte Ausführungsformen der Kontaktvorrichtung anhand der Zeichnungen näher erläutert.

Es zeigen:
- **Fig. 1**:: eine Kontaktvorrichtung gemäß einer ersten Ausführungsform in Vorderansicht;
- **Fig. 2**:: die in **Fig. 1** dargestellte Kontaktvorrichtung in Draufsicht;
- **Fig. 3**:: eine auf einem Kontaktleistenträger angeordnete Kontaktleiste in Vorderansicht;
- **Fig. 4**:: die in **Fig. 3** dargestellte Kontaktleiste in Draufsicht;
- **Fig. 5**:: einen Basisträger der in Fig. 1 dargestellten Kontaktvorrichtung in Vorderansicht;
- **Fig. 6**:: den in **Fig. 5** dargestellten Basisträger in Draufsicht;
- **Fig. 7**:: eine Kontaktvorrichtung in einer weiteren Ausführungsform mit einem als Kontaktleistenträger ausgebildeten Basisträger in Vorderansicht;
- **Fig. 8**:: die in **Fig. 7** dargestellte Kontaktvorrichtung in Draufsicht;
- **Fig. 9**: : den als Kontaktleistenträger ausgebildeten Basisträger in Vorderansicht;
- **Fig. 10**:: den Basisträger in Draufsicht.

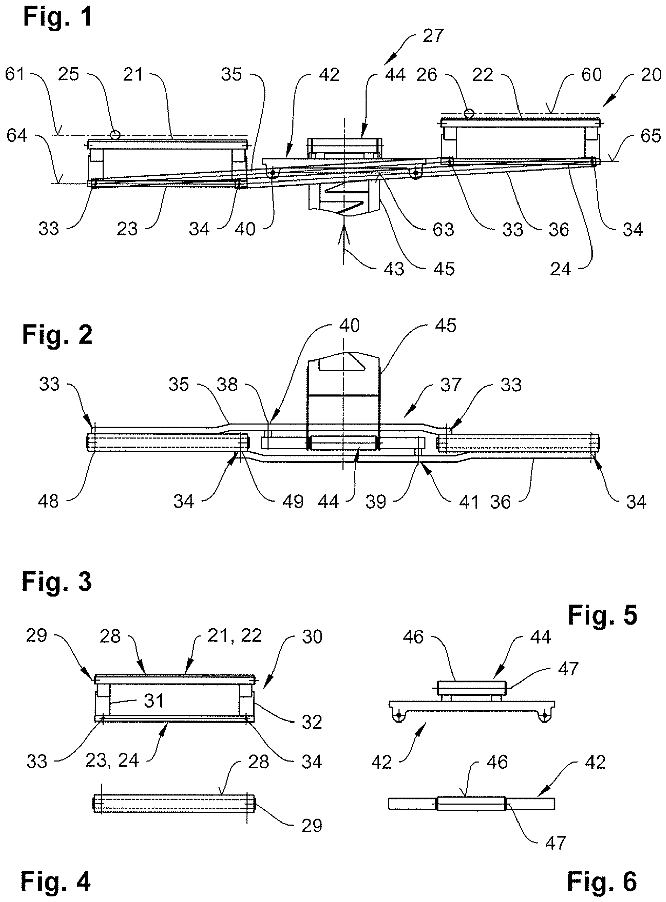

Die **Fig. 1 und 2** zeigen eine Kontaktvorrichtung 20 mit zwei Kontaktleisten 21, 22, die jeweils auf einem Kontaktleistenträger 23, 24 angeordnet sind und zur Kontaktierung jeweils eines Kontaktleiters 25 bzw. 26 einer Kontaktleiteranordnung 27 dienen. Die Kontaktleistenträger 23, 24 sind parallel zu einer Erstreckungsebene 60, 61 der Kontaktleiter 25, 26 angeordnet.

Wie insbesondere aus den **Fig. 3** und **4** zu ersehen ist, umfassen die Kontaktleisten 21, 22 im vorliegenden Fall jeweils einen Kontakt 28, der auf einer Kontaktachse 29 drehbar gelagert ist, wobei die Kontaktachse 29 über eine Federeinrichtung 30 mit zwei hier als Teleskopvorrichtung ausgeführten Federstützen 31, 32 mit dem Kontaktleistenträger 23, 24 verbunden ist.

Bei dem dargestellten Ausführungsbeispiel sind die Kontaktleistenträger 23, 24 in zwei voneinander beabstandeten Gelenkpunkten 33, 34, die jeweils in einer von zwei parallelen Gelenkebenen 64, 65 angeordnet sind, wie in **Fig. 1 und 2** dargestellt, auf zwei parallel zu den Erstreckungsebenen 60, 61 der Kontaktleiter 25, 26 angeordneten Drehachsen 48, 49 an ein zwei Verbindungsstangen 35, 36 umfassendes Parallelgestänge 37 drehgelenkig angeschlossen, und zwar so, dass über eine erste Verbindungsstange 35 jeweils der linke Gelenkpunkt 33 der Kontaktleistenträger 23, 24 und über die zweite Verbindungsstange 36 jeweils der rechte Gelenkpunkt 34 der Kontaktleistenträger 23, 24 miteinander verbunden sind. Weiterhin sind jeweils quer zur Längserstreckung der Verbindungsstangen 35, 36 verlaufende Mittelachsen 38, 39 der Verbindungsstangen 35 bzw. 36 in Gelenkpunkten 40, 41 mit einem parallel zu den Kontaktleistenträgern 23, 24 angeordneten Basisträger 42 drehgelenkig verbunden, wobei sich die Gelenkpunkte 40, 41 in einer parallel zu den Erstreckungsebenen 60, 61 der Kontaktleiter 25, 26 befinden. Somit bewirkt eine Zustellbewegung 43 in Richtung auf die Kontaktleiteranordnung 27 eine entsprechende Zustellung der über das Parallelgestänge 37 mit dem Basisträger 42 verbundenen Kontaktleistenträger 23, 24 .

Zur Ausführung einer derartigen Zustellbewegung 43 ist der Basisträger über ein Drehgelenk 44 verschwenkbar an einen Schwenkausleger 45 einer hier im Übrigen nicht näher dargestellten Hubvorrichtung, die beispielsweise auf dem Dach eines Schienenfahrzeugs nach Art eines Pantographen angeordnet sein kann, angeschlossen.

Wie insbesondere die **Fig. 5** und **6** zeigen, weist die Drehgelenkvorrichtung 44 im vorliegenden Fall eine zum Anschluss an den Schwenkausleger 45 vorgesehene Gelenkhülse 46 auf, die auf einer mit dem Basisträger 42 verbundenen Schwenkachse 47 angeordnet ist.

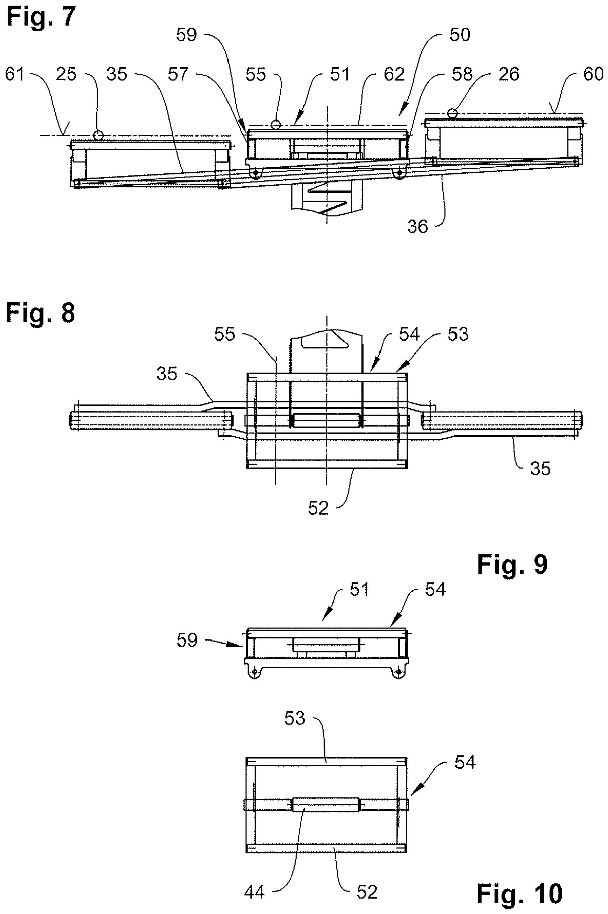

In den **Fig. 7** bis **10** ist in einer weiteren Ausführungsform eine Kontaktvorrichtung 50 dargestellt, die sämtliche Bestandteile der bereits Bezug nehmend auf die **Fig. 1** bis **9** erläuterten Kontaktvorrichtung 20 aufweist und im Unterschied zu der Kontaktvorrichtung 20 einen Basisträger 51 aufweist, der als Kontaktleistenträger ausgebildet ist mit einer im Falle des vorliegend dargestellten Ausführungsbeispiels zwei Kontaktleisten 52, 53 umfassenden Kontaktleistenanordnung 54, wobei die Kontaktleisten 52, 53 in Richtung eines weiteren, oberhalb des Basisträgers 51 in einer Erstreckungsebene 62 angeordneten Kontaktleiters 55 hintereinander liegend angeordnet sind. Die Kontaktleisten 52, 53 sind entsprechend den bereits vorstehend erläuterten Kontaktleisten 21, 22 ausgebildet und über eine zwei Federstützen 57, 58 umfassende Federeinrichtung 59 mit dem Basisträger 51 verbunden.

## Patentansprüche

1. Kontaktvorrichtung (20, 50) zur Kontaktierung einer Kontaktleiteranordnung (27) mit zumindest zwei Kontaktleitern (25, 26), wobei die Kontaktvorrichtung zumindest zwei Kontaktleistenanordnungen mit zumindest jeweils einer auf einem Kontaktleistenträger (23, 24) angeordneten Kontaktleiste (21, 22) aufweist, wobei die Kontaktleistenträger miteinander verbunden sind, derart, dass die Kontaktleistenträger jeweils mit den zueinander parallel ausgerichteten Kontaktleisten ein Parallelogramm ausbilden,
**dadurch gekennzeichnet,**
**dass** die Kontaktleistenträger parallel zu einer Erstreckungsebene (60, 61) der Kontaktleiter und über ein zwei parallel angeordnete Verbindungsstangen (35, 36) aufweisendes Parallelgestänge miteinander verbunden sind, wobei die Kontaktleistenträger jeweils in einer von zwei parallelen Gelenkebenen (64, 65) in voneinander beabstandeten Gelenkpunkten (33, 34) auf parallel zueinander verlaufenden Drehachsen (48, 49) mit den Verbindungsstangen verbunden sind, derart, dass über eine erste Verbindungsstange (35) jeweils der linke Gelenkpunkt (33) der Kontaktleistenträger (23, 24) und über die zweite Verbindungsstange (36) jeweils der rechte Gelenkpunkt der Kontaktleistenträger (23, 24) miteinander verbunden sind, wobei beide Verbindungsstangen (35, 36) mit ihrer jeweils parallel zu den Drehachsen (48, 49) verlaufenden Mittelachse (38, 39) in einem Gelenkpunkt (40, 41) mit dem Basisträger (42) drehgelenkig verbunden sind, derart, dass eine Zustellbewegung (43) des Basisträgers in Richtung der Kontaktleiteranordnung eine entsprechende Zustellbewegung der Kontaktleisten bewirkt.

2. Kontaktvorrichtung nach Anspruch 1,
**dadurch gekennzeichnet,**
**dass** die Kontaktleisten (21, 22) über Federeinrichtungen (30) mit den Kontaktleistenträgern (23, 24) verbunden sind.

3. Kontaktvorrichtung nach Anspruch 1,
**dadurch gekennzeichnet,**
**dass** der Basisträger (51) als weiterer Kontaktleistenträger ausgebildet ist, mit einer über eine Federeinrichtung (59) mit dem Basisträger verbundenen Kontaktleistenanordnung (54) mit zumindest einer Kontaktleiste (52, 53).

4. Kontaktvorrichtung nach einem der vorangehenden Ansprüche,
d**adurch gekennzeichnet**,
dass die drehgelenkige Verbindung zwischen den Verbindungsstangen (35, 36) und dem Basisträger (42, 51) in zwei voneinander beabstandeten Gelenkpunkten (40, 41) des Basisträgers erfolgt, die sich in einer parallel zu den Gelenkebenen (64, 65) der Kontaktleistenträger angeordneten Gelenkebene (63) befinden.

5. Kontaktvorrichtung nach Anspruch 3 oder 4,
**dadurch gekennzeichnet,**
**dass** die Kontaktleistenanordnung (54) zumindest zwei Kontaktleisten (52, 53) aufweist.

6. Kontaktvorrichtung nach einem der Ansprüche 3 bis 5,
**dadurch gekennzeichnet,**
**dass** die Kontaktleistenanordnung (54) eine Mehrzahl in Erstreckungsrichtung der Kontaktleiteranordnung (27) hintereinander angeordnete Kontaktleisten (52, 53) aufweist.

7. Kontaktvorrichtung nach einem der Ansprüche 3 bis 5,
**dadurch gekennzeichnet,**
**dass** die Kontaktleistenanordnung eine Mehrzahl quer zur Erstreckungsrichtung der Kontaktleiteranordnung nebeneinander angeordnete Kontaktleisten aufweist.

8. Kontaktvorrichtung nach einem der Ansprüche 3 bis 7,
**dadurch gekennzeichnet,**
**dass** jeder Kontaktleiste (52, 53) eine Federeinrichtung zugeordnet ist.

9. Kontaktvorrichtung nach einem der vorangehenden Ansprüche,
**dadurch gekennzeichnet,**
**dass** die Kontaktleisten zumindest teilweise als Schleifkontaktleisten ausgebildet sind.

10. Kontaktvorrichtung nach einem der vorangehenden Ansprüche,
**dadurch gekennzeichnet,**
**dass** die Kontaktleisten (21, 22, 52, 53) zumindest teilweise drehbar auf den Kontaktleistenträgern (23, 24) angeordnet sind.

11. Kontaktvorrichtung nach einem der vorangehenden Ansprüche,
**dadurch gekennzeichnet,**
**dass** der Basisträger (42, 51) zur Ausführung einer Zustellbewegung (43) mit einer Hubvorrichtung verbunden ist.

12. Kontaktvorrichtung nach Anspruch 11,
**dadurch gekennzeichnet,**
**dass** die Hubvorrichtung über ein Drehgelenk (44) mit dem Basisträger (42, 51) verbunden ist.

## Claims

1. A contact device (20, 50) for contacting a contact conductor arrangement (27) comprising at least two contact conductors (25, 26), the contact device having at least two contact strip arrangements, each comprising at least one contact strip (21, 22) arranged on a contact strip support (23, 24), the contact strip supports being connected to each other in such a manner that the contact strip supports each form a parallelogram with the contact strips, which are aligned parallel to each other,
**characterized in that**
the contact strip supports are connected to each other parallel to a plane of extension (60, 61) of the contact conductors and via an arrangement of parallel rods comprising two parallel connecting rods (35, 36), the contact strip supports each being connected to the connecting rods in one of two parallel hinge planes (64, 65) at mutually spaced hinge points (33, 34) on mutually parallel rotational axes (48, 49) in such a manner that the respective left hinge points (33) of the contact strip supports (23, 24) are connected via a first connecting rod (35) and the respective right hinge points of the contact strip supports (23, 24) are connected via the second connecting rod (36), a central axis (38, 39) of each connecting rod (35, 36), which runs parallel to the rotational axes (48, 49), being connected to a base support (42) at a hinge point (40, 41) in a pivoting manner such that an advancing motion (43) of the base support in the direction of the contact conductor arrangement causes a corresponding advancing motion of the contact strips.

2. The contact device according to claim 1,
**characterized in that**
the contact strips (21, 22) are connected to the contact strip supports (23, 24) via spring devices (30).

3. The contact device according to claim 1,
**characterized in that**
the base support (51) is realized as an additional contact strip support, which comprises a contact strip arrangement (54), which is connected to the base support via a spring device (59) and comprises at least one contact strip (52, 53).

4. The contact device according to any one of the preceding claims,
**characterized in that**
the pivoting connection between the connecting rods (35, 36) and the base support (42, 51) is realized at two mutually spaced hinge points (40, 41) of the base support, which are located in a hinge plane (63) arranged parallel to the hinge planes (64, 65) of the contact strip supports.

5. The contact device according to claim 3 or 4,
**characterized in that**
the contact strip arrangement (54) comprises at least two contact strips (52, 53).

6. The contact device according to any one of claims 3 to 5,
**characterized in that**
the contact strip arrangement (54) comprises a plurality of contact strips (52, 53) that are arranged one behind the other in the direction of extension of the contact conductor arrangement (27).

7. The contact device according to any one of claims 3 to 5,
**characterized in that**
the contact strip arrangement comprises a plurality of contact strips that are arranged side by side perpendicularly to the direction of extension of the contact conductor arrangement.

8. The contact device according to any one of claims 3 to 7,
**characterized in that**
each contact strip (52, 53) is associated with one spring device.

9. The contact device according to any one of the preceding claims,
**characterized in that**
at least in part, the contact strips are realized as sliding contact strips.

10. The contact device according to any one of the preceding claims,
**characterized in that**
at least in part, the contact strips (21, 22, 52, 53) are arranged on the contact strip supports (23, 24) in a rotatable manner.

11. The contact device according to any one of the preceding claims,
**characterized in that**
the base support (42, 51) is connected to a lifting device to perform an advancing motion (43).

12. The contact device according to claim 11,
**characterized in that**
the lifting device is connected to the base support (42, 51) via a pivot hinge (44).

## Revendications

1. Dispositif de contact (20, 50) pour la mise en contact d'un ensemble de conducteurs de contact (27) comprenant au moins deux conducteurs de contact (25, 26), le dispositif de contact ayant au moins deux ensembles de plaques de contact comprenant chacun au moins une plaque de contact (21, 22) disposée sur un support de plaque de contact (23, 24), les supports de plaque de contact étant reliés de telle manière que chaque support de plaque de contact forme un parallélogramme avec les plaques de contact, qui sont alignées parallèlement l'une à l'autre,
**caractérisé en ce que**
les supports de plaque de contact sont reliés l'un à l'autre parallèlement à un plan d'étendue (60, 61) des conducteurs de contact et par l'intermédiaire d'un ensemble de barres parallèles comprenant deux barres de liaison (35, 36) parallèles, les supports de plaque de contact étant reliés chacun avec les barres de liaison dans un de deux plans d'articulation (64, 65) parallèles à des points d'articulation (33, 34) espacés sur des axes de rotation (48, 49) parallèles de telle manière que les points d'articulation (33) gauches respectifs des supports de plaque de contact (23, 24) sont reliés par l'intermédiaire d'une première barre de liaison (35) et les points d'articulation droits respectifs des supports de plaque de contact (23, 24) sont reliés par l'intermédiaire de la deuxième barre de liaison (36), un axe central (38, 39) de chaque barre de liaison (35, 36), qui s'étend parallèlement aux axes des rotation (48, 49), étant relié de manière pivotante avec un support de base (42) à un point d'articulation (40, 41) de telle manière qu'un mouvement d'avance (43) du support de base dans la direction de l'ensemble de conducteurs de contact entraîne un mouvement d'avance correspondant des plaques de contact.

2. Dispositif de contact selon la revendication 1,
**caractérisé en ce que**
les plaques de contact (21, 22) sont reliées avec les supports de plaque de contact (23, 24) par l'intermédiaire de dispositifs de ressort (30).

3. Dispositif de contact selon la revendication 1,
**caractérisé en ce que**
le support de base (51) est réalisé comme support de plaque de contact additionnel comprenant un ensemble de plaques de contact (54) qui est relié avec le support de base par l'intermédiaire d'un dispositif de ressort (59) et qui comprend au moins une plaque de contact (52, 53).

4. Dispositif de contact selon l'une quelconque des revendications précédentes
**caractérisé en ce que**
la liaison pivotante entre les barres de liaison (35, 36) et le support de base (42, 51) est réalisée à deux points d'articulation (40, 41) du support de base qui sont espacés l'un de l'autre et qui sont situés dans un plan d'articulation (63) disposé parallèlement aux plans d'articulation (64, 65) des supports de plaque de contact.

5. Dispositif de contact selon la revendication 3 ou 4,
**caractérisé en ce que**
l'ensemble de plaques de contact (54) comprend au moins deux plaques de contact (52, 53).

6. Dispositif de contact selon l'une quelconque des revendications 3 à 5,
**caractérisé en ce que**
l'ensemble de plaques de contact (54) comprend une pluralité de plaques de contact (52, 53) disposées l'une derrière l'autre dans la direction d'étendue de l'ensemble de conducteurs de contact (27).

7. Dispositif de contact selon l'une quelconque des revendications 3 à 5,
**caractérisé en ce que**
l'ensemble de plaques de contact comprend une pluralité de plaques de contact disposées côté à côté perpendiculairement à la direction d'étendue de l'ensemble de conducteurs de contact.

8. Dispositif de contact selon l'une quelconque des revendications 3 à 7,
**caractérisé en ce**
**qu'**un dispositif de ressort est assigné à chaque plaque de contact (52, 53).

9. Dispositif de contact selon l'une quelconque des revendications précédentes
**caractérisé en ce que**
les plaques de contact sont au moins en partie réalisées comme plaques de contact de frottement.

10. Dispositif de contact selon l'une quelconque des revendications précédentes
**caractérisé en ce que**
les plaques de contact (21, 22, 52, 53) sont au moins en partie disposées de manière rotative sur les supports de plaque de contact (23, 24).

11. Dispositif de contact selon l'une quelconque des revendications précédentes
**caractérisé en ce que**
le support de base (42, 51) est relié avec un dispositif de levage afin d'exécuter un mouvement d'avance (43).

12. Dispositif de contact selon la revendication 11,
**caractérisé en ce que**
le dispositif de levage est relié avec le support de base (42, 51) par l'intermédiaire d'une articulation pivotante (44).
